(19) Europäisches Patentamt
European Patent Office
Office européen des brevets

(11) **EP 2 943 028 B1**

(12) **EUROPEAN PATENT SPECIFICATION**

(45) Date of publication and mention
of the grant of the patent:
**13.09.2017 Bulletin 2017/37**

(51) Int Cl.:
*H04W 72/04* ^(2009.01)        *H04L 5/14* ^(2006.01)
*H04W 36/18* ^(2009.01)       *H04W 52/40* ^(2009.01)
*H04L 5/00* ^(2006.01)

(21) Application number: **14305681.0**

(22) Date of filing: **09.05.2014**

(54) **A method for communicating resource requests, user equipment and computer program product**

Verfahren zur Kommunikation von Ressourcenanfragen, Benutzergerät und Computerprogrammprodukt

Procédé permettant de communiquer des demandes de ressources, équipement utilisateur et produit de programme informatique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.11.2015 Bulletin 2015/46**

(73) Proprietor: **ALCATEL LUCENT**
**92100 Boulogne-Billancourt (FR)**

(72) Inventors:
• **Wong, Shin Horng**
**Swindon, Wiltshire SN5 7DJ (GB)**
• **Baker, Matthew**
**Swindon, Wiltshire SN5 7DJ (GB)**

(74) Representative: **Berthier, Karine**
**Alcatel-Lucent International**
**148/152, route de la Reine**
**92100 Boulogne-Billancourt (FR)**

(56) References cited:
**US-A1- 2010 130 219    US-A1- 2012 230 268**

• HUAWEI ET AL: "Update of Technical Report on UMTS Heterogeneous Networks", 3GPP DRAFT; 25800_CR0001R1_(REL-12)_R1-135849, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20131111 - 20131115 2 December 2013 (2013-12-02), XP050732509, Retrieved from the Internet: URL:http://www.3gpp.org/ftp/Meetings_3GPP_SYNC/RAN/RAN/Docs/ [retrieved on 2013-12-02]
• "3rd Generation Partnership Project; Technical Specification Group Radio Access Network; Medium Access Control (MAC) protocol specification (Release 11)", 3GPP STANDARD; 3GPP TS 25.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.5.0, 2 January 2014 (2014-01-02), pages 1-207, XP050729344, [retrieved on 2014-01-02]

**(Cont. next page)**

• ALCATEL-LUCENT ET AL: "Consideration of SHO operation in HetNet", 3GPP DRAFT; R1-140140 - REL-12 HETNET - SHO OPERATION V0.0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20140210 - 20140214 9 February 2014 (2014-02-09), XP050735704, Retrieved from the Internet: URL:http://www.3gpp.org/ftp/Meetings_3GPP_ SYNC/RAN/RAN1/Docs/ [retrieved on 2014-02-09]

**Description**

TECHNICAL FIELD

Aspects and embodiments relate, in general, to communicating resource requests, and more specifically, although not exclusively to the transmission of uplink control information.

BACKGROUND

Wireless communications networks are known. In such networks, mobile communication devices known as user equipment (UE) are operable to communicate with base stations or access nodes provided by network providers. In known wireless telecommunications networks, radio coverage is provided to UE devices including mobile telephones and wireless devices such as tablets, in areas known as cells and, when supported by a traditional base station, those cells are often referred to as macro cells. Typically, a base station is located in each cell to provide radio coverage. Mobile connectible devices in each cell are operable to receive information and data from a base station and to transmit information and data to a base station.

Network connectible devices can roam through a region covered by a wireless telecommunications network. A number of such base stations are therefore provided and are distributed geographically in order to provide a wide area of coverage to network connectible devices. When user equipment is within an area served by a base station, communications may be established between the user equipment and the base station over associated radio links.

Traditional base stations provide coverage in relatively large geographical areas. It is possible to provide a heterogeneous network (HetNet) where smaller sized cells are provided within a coverage region of a macro cell. These smaller sized cells may be referred to as micro cells, pico cells or femto cells, and are often referred to as low power nodes (LPN).

One way to establish a small cell is to provide a small cell base station that provides coverage which has a relatively limited range within the coverage area of a macro cell.

The transmission power of a small cell base station is relatively low and, thus, each small cell base station typically provides a relatively small coverage area compared to that of a macro base station. Small cells may be provided in, for example, an office or a home.

Small cells are also provided where communications coverage provided by a macro cell is poor, or where a user wishes to use an alternative communications link provided locally to communicate with the core network and/or to increase capacity within a network.

Deployment of small cells in a wireless communications network can assist a network provider in relation to handling capacity in high traffic areas; for example, so-called "hot spot" areas. An ability to offload traffic to a small cell or cells located in a high traffic area of a network may be particularly useful to a network operator.

Although HetNet deployments may offer advantages, unexpected consequences of such deployments may occur. It is desired to address those consequences.

Published US patent application US 2010/0130219 discloses methods and apparatus for utilising a plurality of uplink and downlink carriers in which a UE activates primary uplink and downlink carriers, and activates or deactivates a secondary uplink carrier based on a signal from a network or upon detection of a pre-configured condition. The UE may deactivate the secondary uplink carrier based on inactivity of E-DCH transmission, a buffer status, a channel condition or power constraints. When the secondary uplink carrier is activated, dedicated physical control channel (DPCCH) transmission may be initiated pre-determined time periods prior to initiating E-DCH transmissions.

Published US patent application US 2012/0230268 describes a method and apparatus for sending uplink control information (UCI) by a multi-mode wireless transmit/receive unit (WTRU) capable of operating on multiple component carriers of a plurality of radio access technologies (RATs) for multi-RAT operation. The multi-mode WTRU may generate UCI pertaining to a first RAT and send at least part of the UCI via a feedback channel on a component carrier of a second RAT.

SUMMARY

According to an example, there is provided a method for communicating resource requests from a user equipment (UE) operating in a wireless heterogeneous communications network which comprises a set of macro cells each of which includes a respective macro node and a respective low-power (LP) node, characterised in that the method comprises transmitting uplink control information from the UE to a macro node of the network using a first uplink channel, said uplink control information indicating whether an allocated uplink data rate for the UE is sufficient, and transmitting the uplink control information to the macro node using a second uplink channel which carries no other information apart from the uplink control information. The uplink control information can be transmitted to the macro node simultaneously using the two uplink channels. The first uplink channel, such as an E-DPCCH channel, can carry control information related to uplink data transmissions, with the second uplink channel, such as an HS-DPCCH channel, carrying only said uplink control information indicating whether an allocated uplink data rate for the device is sufficient.

The uplink control information indicating whether an allocated uplink data rate for the device is sufficient can be transmitted only on the second uplink channel when the said uplink control information has a first value, and transmitted on both the first and the second uplink channels when the said uplink control information has a second value. The uplink control information can be transmitted from the UE in or as part of a feedback control information portion of a feedback control message for downlink transmissions. The uplink control information can replace at least a portion of the feedback control information portion of a feedback control message for downlink transmissions. The uplink control information can be transmitted from the UE in a feedback control information portion of a feedback control message for downlink transmissions using feedback control message instances in which the feedback control information portion is redundant. The uplink control information can be transmitted from the UE in the whole of a redundant feedback control information portion of a feedback control message for downlink transmissions. A different method for setting the channel transmission power can be used for each of the first and second uplink channels. In an example, the methods can differ by at least one of: using different power control commands; using power control commands received from different base stations; using different methods of processing or combining power control commands being set relative to different other uplink channels; and using different transmission power offsets relative to another uplink transmission power.

According to an example, there is provided a user equipment device (UE) operable, in a wireless heterogeneous communications network which comprises a set of macro cells each of which includes a respective macro node and a respective LP node, characterised in that the UE is operable to transmit uplink control information to a macro node of the network using a first uplink channel, said uplink control information indicating whether an allocated uplink data rate for the device is sufficient, and to transmit the uplink control information to the macro node using a second uplink channel which carries no other information apart from the uplink control information. The device can be operable to use an E-DPCCH channel and an HS-DPCCH channel to transmit the uplink control information to the macro node.

According to an example, there is provided a computer program comprising computer program code adapted to execute a method as provided herein.

BRIEF DESCRIPTION OF THE DRAWINGS

Embodiments will now be described, by way of example only, with reference to the accompanying drawings, in which:

Figure 1 is a schematic representation of a heterogeneous network deployment according to an example;

Figure 2 is a schematic representation of a HetNet scenario in which a UE enters the SHO region between macro cell and LPN; and

Figure 3 is a schematic signalling diagram for an Event 1a triggered by UE entering the SHO region as depicted in figure 2.

DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

The third generation partnership project (3GPP) high speed uplink packet access (HSUPA) employs a mechanism known as "happy bit" to enable UE to indicate to the network whether the uplink data rate that is allocated is sufficient or not given the amount of data in the UE buffer. The happy bit is included in an enhanced dedicated channel (E-DCH) dedicated physical control channel (E-DPCCH) for every E-DCH transmissions. That is, a happy bit carries information representing whether or not the UE is content with the current data rate (Grant) allocated by the network, and therefore represents uplink control information indicating whether an allocated uplink data rate for the device is sufficient.

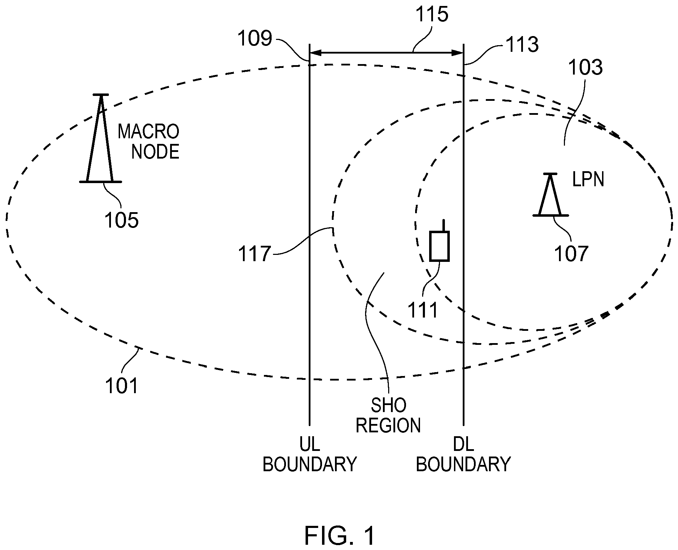

Figure 1 is a schematic representation of a heterogeneous network deployment according to an example. A macro cell 101 and a small cell 103 are provided, served respectively by macro node 105 and low power node 107. An uplink (UL) boundary 109 exists where a user equipment (UE) 111 uplink path loss to the macro cell 105 and to the small cell 107 base station are the same. A downlink (DL) boundary 113 is defined as being where the received pilot power from a macro cell base station 105 and the received pilot power from the small cell base station 107 are the same at the user equipment 111. Typically, in a homogeneous network (a macro cell only deployment, for example) the uplink and downlink boundaries are located at substantially the same position. However, in a HetNet deployment, such as that illustrated in Figure 1, a small cell base station typically has a lower transmit power than that of a macro base station. As a result, the uplink and downlink boundaries are no longer co-located. The region 115 between the uplink and downlink boundary is referred to as the uplink-downlink imbalance region (UL-DL imbalance region). In some networks, a network operator may try to ensure user equipment preferentially selects connection to a small cell by implementing a cell range expansion region (CRE). That region is shown in Figure 1 as 117. In that region, user equipment 111 may be configured to apply a bias in relation to a pilot signal power received from the small cell base station such that connection to the small cell is deemed beneficial by the user equipment.

User equipment in the UL-DL imbalance region which is connected to the macro cell base station (as shown in Figure 1) is likely to cause strong interference to the small cell. Such a scenario is applicable in both LTE and UMTS radio access technologies. In a UMTS network that strong uplink interference is likely to occur unless the user equipment is operating in a soft handover mode (SHO).

When operating according to a soft handover regime, transmissions made by a user equipment may be received and understood by both a serving cell and one or more non-serving cells. However, when in a soft handover mode, downlink data communications are still only sent to user equipment by a serving cell. In other words, there is no "downlink soft handover".

Inner loop power control (ILPC) methods which are implemented when user equipment is operating in soft handover are such that user equipment operates to increase pilot (DPCCH) transmit power only if the transmit power control (TPC) messaging received from all cells (both serving and non-serving) is determined to a power-up instruction. If user equipment determines that there is at least one transmit power control signal which requests power down, the user equipment is operable to power down its uplink pilot (DPCCH) power. Such a method takes into account that as long as the uplink messaging sent by user equipment can successfully be received by one of the serving and non-serving cells then operation of the user equipment may be substantially unaffected.

In a homogeneous network, where the uplink and downlink boundaries are substantially coincident, feedback messaging relating to downlink transmissions being sent by the user equipment to a serving base station is likely to be safely received by the serving cell even when the user equipment is being requested to reduce its pilot transmission power. In a HetNet, downlink feedback information may no longer reach the serving cell if such a power control scheme is implemented.

That is, current Inner Loop Power Control (ILPC) under Soft Handover (SHO) only allows the UE to increase its pilot (DPCCH) power if the TPC from all cells (serving and non-serving) are +1 (i.e. power up) otherwise if there is at least one TPC down (-1), the UE will have to power down its uplink pilot (DPCCH) power. The pilot power (DPCCH) is used as a reference for other physical uplink channels, i.e., the power of other physical channels is an offset to that of the pilot power.

Accordingly, in a HetNet deployment, a UE 111 can be in a Soft Handover (SHO) region where the serving cell is the macro cell 105 and the non-serving cell is the LPN 107. If the SHO region is in the UL-DL imbalance zone 115, the UE uplink signal will be stronger at the LPN 107 compared to that at the macro cell 105. As a consequence of this, the LPN 107 would dominate the ILPC such that the UE powers down its uplink pilot (DPCCH). This leads to essential uplink control info such as HS-DPCCH that is decoded only by the serving cell (i.e. macro cell 105 in this case), to be received at a poor signal strength.

Currently a 2$^{nd}$ pilot, e.g. S-DPCCH may be used to improve the robustness of HS-DPCCH in the SHO region within the UL-DL imbalance zone. The 2$^{nd}$ pilot can, for example, be power controlled only by the macro cell and the HS-DPCCH power offset would be relative to the 2$^{nd}$ pilot. Thus, the HS-DPCCH quality would be maintained at the macro cell. The existing DPCCH (1$^{st}$ pilot) can be power controlled by both the macro and LPN, from which the power offset of E-DPDCH & E-DPCCH are based.

The 2$^{nd}$ pilot scheme requires introduction of an additional physical channel. An alternative to this is to use a virtual 2$^{nd}$ pilot scheme, where the DPCCH (1$^{st}$ pilot) is power controlled by the macro cell only and the HS-DPCCH power offset is relative to the power of the DPCCH thereby ensuring the reliability of the HS-DPCCH. The LPN would control the power offset (relative to DPCCH) of the E-DPCCH, that is the E-DPCCH acts as a (virtual) pilot for the LPN. The E-DPDCH power offset is relative to the power of E-DPCCH.

According to an example, resource requests from UE operating in a wireless communications network are communicated by transmitting uplink control information (such as a happy bit) from the UE device to an access node of the network using two different uplink channels. In an example, the Happy Bit is transmitted on an additional uplink channel as well as the typical E-DPCCH on which it is normally communicated.

In an example, uplink control information relating to scheduling of uplink transmissions can be transmitted simultaneously (or close to simultaneously or at different time slots) on two different uplink channels with different methods of setting the transmission power.

For example, the methods may differ by one or more of:

- using different power control commands, such as power control commands received on different downlink channels;
- using power control commands received from different base stations;
- using different methods of processing or combining power control commands, for example using an "OR of the downs" rule for combining power control commands received from multiple base stations for one of the uplink channels while not combining power control commands for the other channel;
- the transmission power being set relative to different other uplink channels, for example one channel having its transmission power set relative to an uplink control channel such as a DPCCH and the other channel having its transmission power set relative to a control channel carrying feedback information related to downlink data transmissions such as an HS-DPCCH;
- the transmission power being set by means of a different offset from the transmission power of another uplink channel such as a DPCCH.

One uplink channel can be a control channel carrying control information related to uplink data transmissions, such as the existing E-DPCCH which can still continue to carry the Happy Bit and therefore no change is required to the E-DPCCH. In an example, the second uplink channel can be another control channel which carries, in addition to the said indicator, feedback control information (such as ACK/NACK and channel state information (CSI)) for downlink transmissions.

The second uplink channel can be another control channel which carries no other information apart from the said indicator. Such a channel can have a very high spreading factor or very low code rate, such that although the transmit power of the channel may be much lower than that of the E-DPCCH, the energy per information bit may be higher, enabling the bit to be reliably received at the macro cell. In an example, the said indicator can be transmitted only if it has one particular value (e.g. "unhappy"), and not if it has another value (e.g. "happy").

It will be appreciated that examples described herein are applicable to both 2nd pilot schemes (i.e. physical and virtual 2nd pilot schemes). However, using a virtual 2nd pilot scheme would avoid introducing new uplink pilot bits and therefore may be preferable due to the lower total uplink transmit power requirement.

In an example, to carry the Happy Bit, a new HS-DPCCH format (rather than a new physical channel) can be provided. This HS-DPCCH format can be configured when the UE enters SHO with at least one LPN as a non-serving cell. This configuration can be done as part of Active Set Update. The network need not configure the HS-DPCCH to carry the Happy Bit if it deems that the E-DPCCH offset is sufficiently high that the macro can decode the Happy Bit. Different methods of power control for the Happy Bit can be achieved by having the 1st Happy Bit carried by the E-DPCCH being power controlled by the LPN (in virtual pilot for example) and also by the macro (if a 2nd pilot is introduced) whilst the 2nd Happy Bit carried by the HS-DPCCH can be power controlled by only the macro node.

In an example, a channel quality indicator (CQI) bit (before input to a Reed-Muller block code) can be used as the Happy Bit. Using one bit from the CQI reduces the number of CQI values by half (i.e. from 32 to 16). However, it is expected that the UE at SHO region would unlikely to be reporting high CQI and hence the higher half of the CQI range need not be used. Alternatively the granularity of the CQI can be reduced from 32 to 16; the reduction in granularity would not need to be uniform across the CQI range: for example, two out of every three CQI values can be removed in the top half of the table, and only one out of every three in the bottom half of the table. Alternatively an unused CQI codeword (post R-M block code) can be used to indicate that the UE is "unhappy"; in this case, as above, the second uplink channel only carries the said indicator if the indicator has one particular value, and not otherwise. In another example, the "unhappy" value of the Happy Bit can be represented by using an unused codeword in the ACK/NACK. It should be appreciated that the "happy" value may not need to be represented since the absence of any indication would mean that the UE is happy with the current resource.

In an example, one of the PMI bits can be used to carry the Happy Bit. This would reduce the number of precoding indices that can be used by the UE. In another example, the second uplink channel can carry only the said indicator in subframes when CQI and/or ACK/NACK is not needed to be sent; such subframes may also be defined to occur periodically.

In some cases, the spreading code used by the second uplink channel may be the same as the spreading code used by a feedback control information channel in subframes when the feedback control information channel is not transmitting feedback control information.

According to a further example, the slot timing of the second uplink channel can be aligned either with the slot timing of the feedback control information channel (HS-DPCCH) or with the slot timing of the control channel carrying control information related to uplink data transmissions (E-DPCCH).

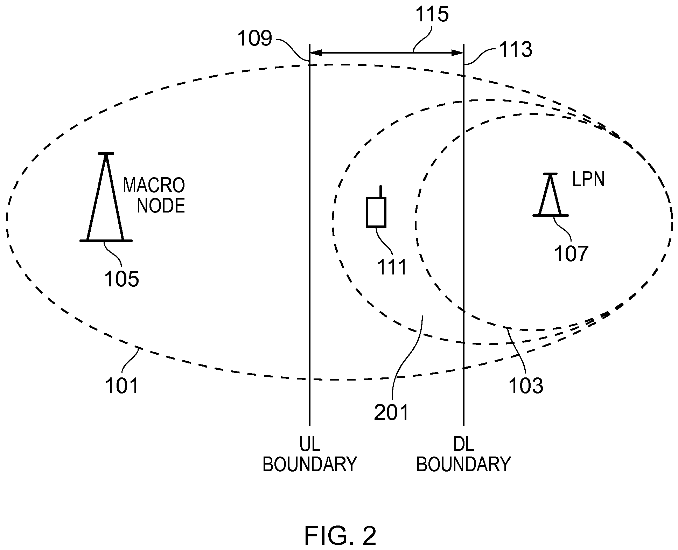

Figure 2 is a schematic representation of a HetNet scenario in which a UE 111 enters the SHO region 201 between macro cell 105 and LPN 107.

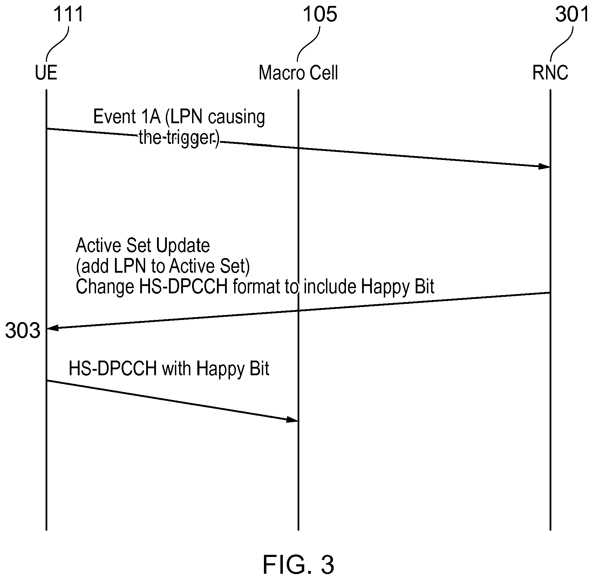

Figure 3 is a schematic signaling diagram for an Event 1a triggered by UE 111 entering the SHO region 201 as depicted in figure 2.

The network (RNC) 301 adds the LPN 107 to the UE's 111 Active Set at 303. In an example, the network can configure the UE 111 to operate with virtual 2nd pilot and change its HS-DPCCH format such that the Happy Bit is also carried by the HS-DPCCH channel (in addition to E-DPCCH).

As noted above, one of the CQI bits can be used to carry the Happy Bit. The number of possible CQI indexes is therefore reduced from 32 to 16 in an example. The granularity of the CQI index is therefore reduced. One possible interpretation of CQI is:

$$CQI_{NEW} = 2*CQI_{REPORT}$$

Where $CQI_{NEW}$ is the CQI interpreted by the eNB given the reported CQI, $CQI_{REPORT}$, that has lower granularity.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

**Claims**

1. A method for communicating resource requests from a user equipment, UE (111), operating in a wireless heterogeneous communications network which comprises a set of macro cells (101) each of which includes a respective macro node (105) and a respective low-power, LP, node (107), **characterised in that** the method comprises transmitting uplink control information from the UE to a macro node of the network using a first uplink channel, said uplink control information indicating whether an allocated uplink data rate for the UE is sufficient, and transmitting the uplink control information to the macro node using a second uplink channel which carries no other information apart from the uplink control information.

2. A method as claimed in claim 1, wherein the uplink control information is transmitted to the macro node simultaneously using the first and second uplink channels.

3. A method as claimed in claim 1 or 2, wherein the first uplink channel, such as an Enhanced Dedicated Physical Control Channel, E-DPCCH, carries control information related to uplink data transmissions, and the second uplink channel, such as a High-Speed Dedicated Physical Control Channel, HS-DPCCH, carries only said uplink control information indicating whether an allocated uplink data rate for the device is sufficient.

4. A method as claimed in any preceding claim, wherein the uplink control information indicating whether an allocated uplink data rate for the device is sufficient is transmitted only on the second uplink channel when the said uplink control information has a first value and is transmitted on both the first and the second uplink channels when the said uplink control information has a second value.

5. A method as claimed in any preceding claim, wherein the uplink control information is transmitted from the UE in or as part of a feedback control information portion of a feedback control message for downlink transmissions.

6. A method as claimed in claim 5, wherein the uplink control information replaces at least a portion of the feedback control information portion of a feedback control message for downlink transmissions.

7. A method as claimed in claim 5 or 6, wherein the uplink control information is transmitted from the UE in a feedback control information portion of a feedback control message for downlink transmissions using feedback control message instances in which the feedback control information portion is redundant.

8. A method as claimed in claim 7, wherein the uplink control information is transmitted from the UE in the whole of a redundant feedback control information portion of a feedback control message for downlink transmissions.

9. A method as claimed in any preceding claim, wherein a different method for setting the channel transmission power is used for each of the first and second uplink channels, the methods differing by at least one of: using different power control commands; using power control commands received from different base stations; using different methods of processing or combining power control commands being set relative to different other uplink channels; and using different transmission power offsets relative to another uplink transmission power.

10. A user equipment, UE, device for operation in a wireless heterogeneous communications network which comprises a set of macro cells (101) each of which includes a respective macro node (105) and a respective LP node (107), **characterised in that** the UE is operable to transmit uplink control information to a macro node of the network using a first uplink channel, said uplink control information indicating whether an allocated uplink data rate for the device is sufficient, and to transmit the uplink control information to the macro node using a second uplink channel which carries no other information apart from the uplink control information.

11. A user equipment device as claimed in claim 10, wherein the device is operable to use an E-DPCCH channel and an HS-DPCCH channel to transmit the uplink control information to the macro node.

12. A computer program comprising computer program code means adapted to execute a method according to any of claim 1 to 9 when said program is run on a computer.

**Patentansprüche**

1. Verfahren zum Vermitteln von Ressourcenanforderungen von einem Teilnehmergerät, UE (111), das in einem drahtlosen heterogenen Kommunikationsnetzwerk betrieben wird, welches einen Satz von Makrozellen umfasst, von denen jede einen entsprechenden Makroknoten (105) und einen entsprechenden Niedrigleistungsknoten, LP, (107) einschließt, **dadurch gekennzeichnet, dass** das Verfahren umfasst das Übertragen von Uplink-Steuerinformation vom UE auf einen Makroknoten des Netzwerks unter Benutzen eines ersten Uplink-Kanals, wobei besagte Uplink-Steuerinformation anzeigt, ob eine zugeteilte Uplink-Datenrate für das UE hinreichend ist, und Übertragen der Uplink-Steuerinformation auf den Makroknoten unter Benutzen eines zweiten Uplink-Kanals, der keine andere Information trägt außer der Uplink-Steuerinformation.

2. Verfahren nach Anspruch 1, wobei die Uplink-Steuerinformation gleichzeitig auf den Makroknoten übertragen wird unter Benutzen des ersten und zweiten Uplink-Kanals.

3. Verfahren nach Anspruch 1 oder 2, wobei der erste Uplink-Kanal, wie zum Beispiel ein Enhanced Dedicated Physical Control Channel, E-DPCCH, Steuerinformation trägt, die mit Uplink-Datenübertragungen in Bezug steht, und der zweite Uplink-Kanal, wie zum Beispiel ein High-Speed Dedicated Physical Control Channel, HS-DPCCH, nur besagte Uplink-Steuerinformation trägt, ob eine zugewiesene Uplink-Datenrate für das Gerät hinreichend ist.

4. Verfahren nach einem beliebigen der vorhergehenden Ansprüche, wobei die Uplink-Steuerinformation, die angibt, ob eine zugewiesene Uplink-Datenrate für das Gerät hinreichend ist, nur auf den zweiten Uplink-Kanal übertragen wird, wenn besagte Uplink-Steuerinformation einen ersten Wert aufweist, und auf beide, den ersten und den zweiten Uplink-Kanal, übertragen wird, wenn besagte Uplink-Steuerinformation einen zweiten Wert aufweist.

5. Verfahren nach einem beliebigen der vorhergehenden Ansprüche, wobei die Uplink-Steuerinformation von dem UE in oder als Teil eines Feedback-Steuerinformationsanteils einer Feedback-Steuernachricht für Downlink-Übertragungen übertragen wird.

6. Verfahren nach Anspruch 6, wobei die Uplink-Steuerinformation mindestens einen Anteil des Feedback-Steuerinformationsanteils einer Feedback-Steuernachricht für Downlink-Übertragungen ersetzt.

7. Verfahren nach Anspruch 5 oder 6, wobei die Uplink-Steuerinformation von dem UE in einem Feedback-Steuerinformationsanteil einer Feedback-Steuernachricht für Downlink-Übertragungen übertragen wird unter Benutzen von Feedback-Steuernachrichtinstanzen, in denen der Feedback-Steuerinformationsanteil redundant ist.

8. Verfahren nach Anspruch 7, wobei die Uplink-Steuerinformation von dem UE im Gesamten eines redundanten Feedback-Steuerinformationsanteils einer Feedback-Steuernachricht für Downlink-Übertragungen übertragen wird.

9. Verfahren nach einem beliebigen der vorhergehenden Ansprüche, wobei ein anderes Verfahren für das Einstellen der Kanalsendeleistung für jeden der ersten und zweiten Uplink-Kanäle verwendet wird, wobei sich die Verfahren unterscheiden mindestens durch das Benutzen unterschiedlicher Leistungssteuerbefehle; Benutzen von Leistungssteuerbefehlen, die von verschiedenen Basisstationen empfangen wurden; Benutzen verschiedener Verfahren der Verarbeitung oder des Kombinierens von Leistungssteuerbefehlen, die in Bezug zu verschiedenen anderen Uplink-Kanälen eingestellt worden sind; und Benutzen verschiedener Sendeleistungs-Offsets in Bezug zu einer anderen Uplink-Sendeleistung.

10. Teilnehmergerät für den Betrieb in einem drahtlosen heterogenen Kommunikationsnetzwerk, welches einen Satz von Makrozellen umfasst, von denen jede einen entsprechenden Makroknoten und einen entsprechenden LP-Knoten (107) aufweist, **dadurch gekennzeichnet, dass** das UE betreibbar ist zum Übertragen von Uplink-Steuerinformation auf einen Makroknoten des Netzwerks unter Benutzen eines ersten Uplink-Kanals, wobei besagte Uplink-Steuerinformation anzeigt, ob eine zugeteilte Uplink-Datenrate für das UE hinreichend ist, und zum Übertragen der Uplink-Steuerinformation auf den Makroknoten unter Benutzen eines zweiten Uplink-Kanals, der keine andere Information trägt außer der Uplink-Steuerinformation.

11. Teilnehmergerät nach Anspruch 10, wobei das Gerät betreibbar ist zum Benutzen eines E-DPCCH-Kanals und eines HS-DPCCH-Kanals zum Übertragen der Uplink-Steuerinformation auf den Makroknoten.

12. Computerprogramm, umfassend ein Computerprogrammcode-Mittel, das ausgelegt ist zum Ausführen eines Verfahrens nach einem beliebigen der Ansprüche 1 bis 9, wenn das besagte Programm auf einem Computer läuft.

## Revendications

1. Procédé pour communiquer des demandes de ressource à partir d'un équipement utilisateur, UE (111), fonctionnant dans un réseau de communications hétérogène sans fil qui comprend un ensemble de cellules macro (101) dont chacune inclut un noeud macro respectif (105) et un noeud de faible puissance, LP, respectif (107), **caractérisé en ce que** le procédé comprend la transmission d'informations de contrôle de liaison montante de l'UE à un noeud macro du réseau en utilisant un premier canal de liaison montante, lesdites informations de contrôle de liaison montante indiquant si un débit de données de liaison montante alloué pour l'UE est suffisant, et la transmission des informations de contrôle de liaison montante au noeud macro en utilisant un second canal de liaison montante qui n'achemine pas d'autres informations que les informations de contrôle de liaison montante.

2. Procédé selon la revendication 1, dans lequel les informations de contrôle de liaison montante sont transmises au noeud macro simultanément en utilisant les premier et second canaux de liaison montante.

3. Procédé selon la revendication 1 ou 2, dans lequel le premier canal de liaison montante, tel qu'un Canal de contrôle physique dédié amélioré, E-DPCCH, (Enhanced Dedicated Physical Control Channel) achemine des informations de contrôle liées à des transmissions de données de liaison montante, et le second canal de liaison montante, tel qu'un Canal de contrôle physique dédié à haute vitesse, HS-DPCCH, (High-Speed Dedicated Physical Control Channel) achemine uniquement lesdites informations de contrôle de liaison montante indiquant si un débit de données de liaison montante alloué pour le dispositif est suffisant.

4. Procédé selon l'une quelconque des revendications précédentes, dans lequel les informations de contrôle de liaison montante indiquant si un débit de données de liaison montante alloué pour le dispositif est suffisant sont transmises uniquement sur le second canal de liaison montante lorsque lesdites informations de contrôle de liaison montante ont une première valeur et sont transmises à la fois sur le premier et le second canal de liaison montante lorsque lesdites informations de contrôle de liaison montante ont une seconde valeur.

5. Procédé selon l'une quelconque des revendications précédentes, dans lequel les informations de contrôle de liaison montante sont transmises depuis l'UE dans ou comme partie d'une partie d'informations de contrôle de rétroaction d'un message de contrôle de rétroaction pour des transmissions de liaison descendante.

6. Procédé selon la revendication 5, dans lequel les informations de contrôle de liaison montante remplacent au moins une partie de la partie d'informations de contrôle de rétroaction d'un message de contrôle de rétroaction pour des transmissions de liaison descendante.

7. Procédé selon la revendication 5 ou 6, dans lequel les informations de contrôle de liaison montante sont transmises depuis l'UE dans une partie d'informations de contrôle de rétroaction d'un message de contrôle de rétroaction pour des transmissions de liaison descendante en utilisant des instances de message de contrôle de rétroaction dans lesquelles la partie d'informations de contrôle de rétroaction est redondante.

8. Procédé selon la revendication 7, dans lequel les informations de contrôle de liaison montante sont transmises depuis l'UE dans l'intégralité d'une partie d'informations de contrôle de rétroaction redondante d'un message de contrôle de rétroaction pour des transmissions de liaison descendante.

9. Procédé selon l'une quelconque des revendications précédentes, dans lequel un procédé différent pour régler la puissance de transmission de canal est utilisé pour chacun des deux premier et second canaux de liaison montante, les procédés différant par au moins l'une de : l'utilisation de commandes de contrôle de puissance différentes ; l'utilisation de commandes de contrôle de puissance reçues en provenance de stations de base différentes ; l'utilisation de procédés différents de traitement ou de combinaison de commandes de contrôle de puissance qui sont réglées par rapport à d'autres canaux de liaison montante différents ; et l'utilisation de décalages de puissance de transmission différents par rapport à une autre puissance de transmission de liaison montante.

10. Dispositif d'équipement utilisateur, UE, pour un fonctionnement dans un réseau de communications hétérogène sans fil qui comprend un ensemble de cellules macro (101) dont chacune inclut un noeud macro respectif (105) et un noeud LP respectif (107), **caractérisé en ce que** l'UE est exploitable pour transmettre des informations de contrôle de liaison montante à un noeud macro du réseau en utilisant un premier canal de liaison montante, lesdites informations de contrôle de liaison montante indiquant si un débit de données de liaison montante alloué pour le dispositif est suffisant, et pour transmettre les informations de contrôle de liaison montante au noeud macro en utilisant un second canal de liaison montante qui n'achemine pas d'autres informations que les informations de contrôle de liaison montante.

11. Dispositif d'équipement d'utilisateur selon la revendication 10, dans lequel le dispositif est exploitable pour utiliser un canal E-DPCCH et un canal HS-DPCCH pour transmettre les informations de contrôle de liaison montante au noeud macro.

12. Programme informatique comprenant des moyens de code de programme informatique adaptés pour exécuter un procédé selon l'une quelconque des revendications 1 à 9 lorsque ledit programme est exécuté sur un ordinateur.

FIG. 1

FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100130219 A
- US 20120230268 A